# EUROPÄISCHE PATENTSCHRIFT

(11) **EP 0 738 033 B1**
(45) Veröffentlichungstag und Bekanntmachung des Hinweises auf die Patenterteilung: **15.04.1998**
(21) Anmeldenummer: 95119602.1
(22) Anmeldetag: 13.12.1995
(51) Int. Cl.: H02J 13/00

(54) **Rundsteueranlage**
Ripple control installation
Installation de télécommande centralisée

(30) Priorität: 10.04.1995 CH 1026/95
(43) Veröffentlichungstag der Anmeldung: 16.10.1996
(73) Patentinhaber: Landis & Gyr Technology Innovation AG, 6301 Zug (CH)
(72) Erfinder: Ulmi, Remo, CH-6331 Hünenberg (CH); Walzer, Claude, CH-6312 Steinhausen (CH)

(56) Entgegenhaltungen:
- EP-A- 0 163 572
- EP-A- 0 192 120
- EP-A- 0 242 609
- EP-A- 0 558 349
- US-A- 4 057 785

## Beschreibung

Die Erfindung bezieht sich auf eine Anlage gemäss dem Oberbegriff des Anspruchs 1.

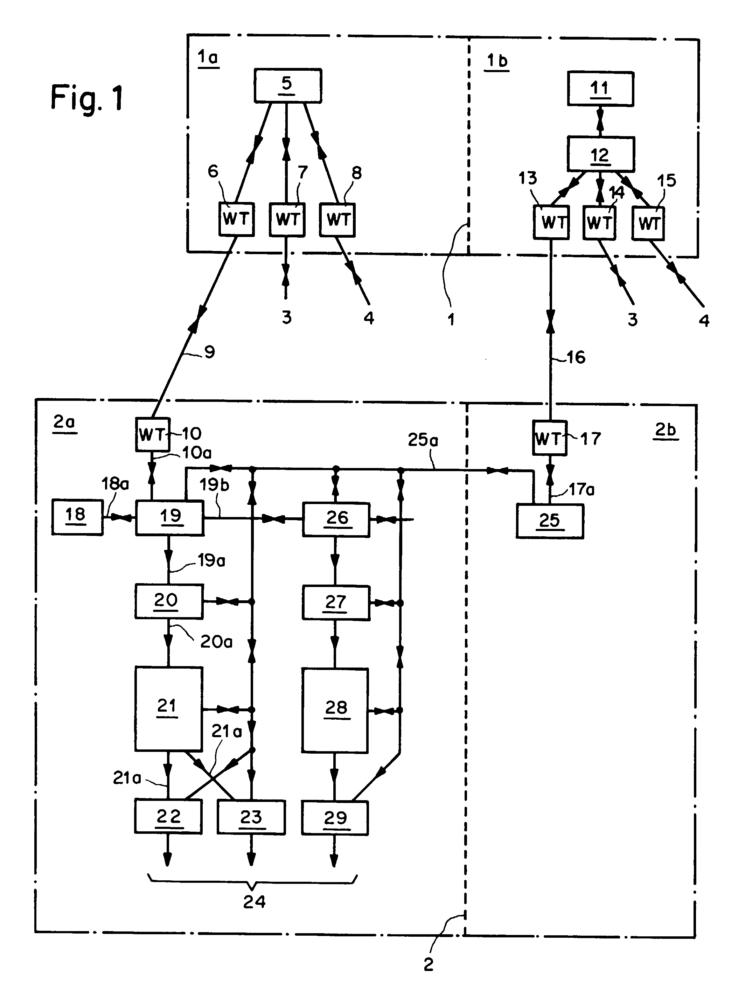

Eine bekannte Anlage der eingangs genannten Art ist in der Figur 1 dargestellt. Die einzelnen Baugruppen der Anlage, vor allem in deren Unterstellen, sind aus Sicherheitsgründen, z. B. wegen Brandgefahr, in der Regel in unterschiedlichen Räumen eines Gebäudes untergebracht und sind somit 20 bis 50 Meter entfernt und räumlich getrennt voneinander angeordnet. Diese Baugruppen sind in der bekannten Anlage über eine Vielzahl langer und oft unübersichtlicher Paralleldrahtverbindungen miteinander verbunden, was teuer ist, eine mögliche Störbehebung stark erschwert und gegebenenfalls eine zeitaufwendige Fehlersuche erfordert.

Der Erfindung liegt die Aufgabe zugrunde, eine Anlage der eingangs genannten Art zu verwirklichen, die mindestens zwischen den Baugruppen der Unterstellen die Verwendung einer Vielzahl teurer, langer und unübersichtlicher Paralleldrahtverbindungen vermeidet oder minimiert und die gegebenenfalls eine schnelle Störbehebung sowie Fehlersuche ermöglicht und/oder erleichtert.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:
- Fig. 1: ein prinzipielles Blockschaltbild einer bekannten Anlage,
- Fig. 2: ein prinzipielles Blockschaltbild einer ersten Variante einer erfindungsgemässen Anlage und
- Fig. 3: ein prinzipielles Blockschaltbild einer zweiten Variante einer erfindungsgemässen Anlage.

Die Anlage enthält eine Zentrale 1, die in der Regel über grössere Entfernungen mittels beliebiger Übertragungswege, z. B. mittels Trägerfrequenzübertragungen über Hochspannungsleitungen TFH und/oder mittels Wechselstrom-Telegraphie WT, mit mindestens einer Unterstelle 2 verbunden ist. Nachfolgend gilt die Annahme, dass zur Übertragung Wechselstrom-Telegraphie verwendet wird, welche nachfolgend kurz mit WT bezeichnet wird. In der Fig. 1 gilt ausserdem die Annahme, dass die Zentrale 1 mit drei Unterstellen 2, 3 und 4 verbunden ist, wovon nur die Unterstelle 2 ausführlich dargestellt ist. Sowohl die Zentrale 1 als auch die Unterstellen 2 bis 4 enthalten jeweils eine Rundsteuer-Teilanlage 1a, 2a, 3a und 4a sowie eine Fernwirk-Teilanlage 1b, 2b, 3b und 4b. Die Rundsteuer-Teilanlage la der Zentrale 1 weist eine zentrale Rundsteuerautomatik oder ein zentrales Rundsteuer-Kommandogerät auf, welche beide nachfolgend als zentrale Rundsteuer-Sendeautomatik 5 bezeichnet werden. Die letztere ist über bidirektionale Verbindungen mit je einem pro Unterstelle vorhandenen, Rundsteuerzwecken dienenden WT-Sender/Empfänger 6 bzw. 7 bzw. 8 verbunden, der jeweils, was in der Fig. 1 nicht dargestellt ist, einen oder, aus Redundanzgründen, mehrere Pilotsignal-Sender, einen Rundsteuertelegramm-Sender und einen Rundsteuerrückmelde-Empfänger enthält. Die beiden letzteren sind dabei vorzugsweise jeweils über ein erstes Aderpaar und der erstere jeweils über ein zweites Aderpaar einer bidirektionalen WT-Kabelverbindung 9 mit einem Rundsteuerzwecken dienenden WT-Sender/Empfänger 10 in der zugehörigen Unterstelle, z. B. in der Unterstelle 2 verbunden. Der WT-Sender/Empfänger 10 enthält in allen Unterstellen jeweils einen Pilotsignal-Empfänger, einen Rundsteuertelegramm-Empfänger und einen Rundsteuerrückmelde-Sender, was in der Fig. 1 wieder nicht dargestellt ist. Die WT-Sender/Empfänger 6 und 10 sowie die WT-Kabelverbindung 9 bilden zusammen einen zur Unterstelle 2 gehörenden, der Rundsteuerung dienenden ersten WT-Kanal 6;9;10. Die Fernwirk-Teilanlage 1b der Zentrale 1 enthält eine Fernwirk-Leitstelle 11, die über bidirektionale Verbindungen mit einer Kommunikations-Schnittstelle 12 verbunden ist, die ihrerseits jeweils über bidirektionale Verbindungen mit je einem oder mehreren pro Unterstelle vorhandenen, Fernwirkzwecken dienenden WT-Sender/Empfängern 13 bzw. 14 bzw. 15 verbunden ist. Der letztere enthält, in der Fig. 1 nicht dargestellt, jeweils einen Femwirksignal-Sender und einen Fernwirkrückmelde-Empfänger, die beide vorzugsweise über ein Aderpaar einer bidirektionalen Kabelverbindung 16 mit einem zugehörigen, Fernwirkzwecken dienenden WT-Sender/Empfänger 17 der betreffenden Unterstelle, z. B. der Unterstelle 2 verbunden ist. Der WT-Sender/Empfänger 17 enthält seinerseits in allen Unterstellen, was in der Fig. 1 wieder nicht dargestellt ist, einen Fernwirksignal-Empfänger und einen Fernwirkrückmelde-Sender. Die WT-Sender/Empfänger 13 und 17 sowie die WT-Kabelverbindung 16 bilden zusammen einen zur Unterstelle 2 gehörenden, der Fernwirk dienenden zweiten WT-Kanal 13;16;17.

Alle Unterstellen 2 bis 4 sind ähnlich aufgebaut wie die Unterstelle 2. Die Rundsteuer-Teilanlage 2a der letzteren enthält zusätzlich zu den WT-Sender/Empfängern 10 und 17 eine lokale Rundsteuer-Sendeautomatk 18, die über bidirektionale Drahtverbindungen 18a mit einem Rundsteuersender-Steuergerät 19 verbunden ist, welches nachfolgend kurz Steuergerät 19 genannt wird. Der WT-Sender/Empfänger 10 ist über weitere bidirektionale Drahtverbindungen 10a ebenfalls mit dem Steuergerät 19 verbunden, welches ausserdem über eine Vielzahl von Drahtverbindungen 19a mit einem Rundsteuersender-Triggergerät 20 verbunden ist, welches nachfolgend kurz Triggergerät 20 genannt wird. Das letztere ist seinerseits über Drahtverbindungen 20a mit einem ersten Rundsteuersender 21 verbunden, dessen Ausgang mittels Kabel- und Drahtverbindungen 21a über eine erste und/oder zweite Ankopplung 22 bzw. 23 mit einer Mittelspannungs- oder Hochspannungs-Ebene eines Energieversorgungsnetzes 24 verbunden ist. Die Fernwirk-Teilanlage 2b der Unterstelle 2 enthält eine Fernwirk-Unterstelle 25, die mittels Drahtverbindungen 17a mit dem WT-Sender/Empfänger 17 sowie über eine Vielzahl weiterer Drahtverbindungen 25a mit dem Steuergerät 19, dem Triggergerät 20, dem Rundsteuersender 21, den Ankopplungen 22 und/oder 23 sowie möglicherweise mit weiteren Steuergeräten, Triggergeräten, Rundsteuersendern und Ankopplungen verbunden ist. In der Fig. 1 wurde z. B. angenommen, dass noch ein weiteres Rundsteuersender-Steuergerät 26, ein weiteres Rundsteuersender-Triggergerät 27, ein weiterer Rundsteuersender 28 und eine weitere Ankopplung 29 in der Rundsteuer-Teilanlage 2a der Unterstelle 2 vorhanden sind, die somit ebenfalls alle über die Drahtverbindungen 25a mit der Fernwirk-Unterstelle 25 verbunden sind. Die zusammengehörenden Baugruppen 26, 27, 28 und 29 sind unter sich gleich oder ähnlich verdrahtet wie die zusammengehörenden Baugruppen 19, 20, 21 und 22 bzw. 23. Alle Steuergeräte 19, 26, usw. sind ausserdem noch unter sich durch eine Viele von Drahtverbindungen 19b verbunden.

Die von der Zentrale 1 zur Unterstelle 2 zu übertragenden Rundsteuerinformationen, also das Pilotsignal und das Rundsteuertelegramm, werden in der zentralen Sendeautomatik 5 erzeugt und über den WT-Kanal 6;9;10 zur Unterstelle 2 übertragen, von wo sie über die Verbindungen 10a dem Steuergerät 19 und ggf. über die Verbindungen 19b dem Steuergerät 26 zugeführt werden. Statt in der Zentrale 1 können die Rundsteuerinformationen auch lokal in der Unterstelle 2 erzeugt werden und zwar in der lokalen Rundsteuer-Sendeautomatik 18, um dem Steuergerät 19 über die Verbindungen 18a und ggf. dem Steuergerät 26 über die Verbindungen 19b zugeführt zu werden. Die in den Steuergeräten 19 und 26 verarbeiteten und/oder aufbereiteten Rundsteuerinformationen werden über das Triggergerät 20 bzw. 27 parallel den einzelnen Rundsteuersendern 21 bzw. 28 zugeführt die ihr Rundsteuertelegramm jeweils über die Ankopplungen 22 und 23 bzw. über die Ankopplung 29 ins Energieversorgungsnetz 24 speisen. In der Unterstelle 2 werden ausserdem gewisse Informationen des Rundsteuersystems erfasst und entweder als Rundsteuer-Rückmeldesignal unmittelbar über den WT-Kanal 6;9;10 zur Rundsteuer-Teilanlage 1a der Zentrale 1 übertragen oder über die Verbindungen 25a der Fernwirk-Teilanlage 2b der Unterstelle 2 zugeleitet, von wo sie als Fernwirk-Rückmeldesignal über den WT-Kanal 13;16;17 zur Netzleitstelle 11 der Fernwirk-Teilanlage 1b der Zentrale 1 übertragen werden. In umgekehrter Übertragungsrichtung werden gewisse in der Netzleitstelle 11 erzeugte Informationen und/oder Befehle des Rundsteuersystems über den WT-Kanal 13;16;17 von der Zentrale 1 zur Fernwirk-Unterstelle 25 der Unterstelle 2 übermittelt, von wo sie über die Verbindungen 25a zur Rundsteuer-Teilanlage 2a der Unterstelle 2 weitergeleitet werden.

Wie bereits erwähnt, sind die verschiedenen Baugruppen einer Unterstelle aus Sicherheitsgründen in der Regel getrennt und entfernt voneinander in unterschiedlichen Räume eines Gebäudes untergebracht. Dementsprechend sind die räumliche Entfernungen zwischen den einzelnen Baugruppen der Unterstelle gross. In jeder Unterstelle 2, 3, 4, usw. können somit die einzelnen Baugruppen 10, 17 bis 23 und 25 bis 29 räumlich zwanzig bis fünfzig Meter entfernt voneinander angeordnet sein, was einen grossen und aufwendigen Parallel-Verdrahtungsaufwand erfordert, der aus einer Unmenge von Draht- und/oder Kabelverbindungen 10a, 17a, 18a, 19a, 19b, 20a, 21a, 25a usw. besteht, die bis zu fünfzig Meter lang sein können, was teuer ist und zu unübersichtlichen Drahtverbindungen führen kann, die leicht gestört oder beschädigt werden können. Dies kann dann, z. B. bei Betriebsstörungen, zu Service- und Fehlerbehebungs-Schwierigkeiten führen, die zeitraubende Gegenmassnahmen erfordern.

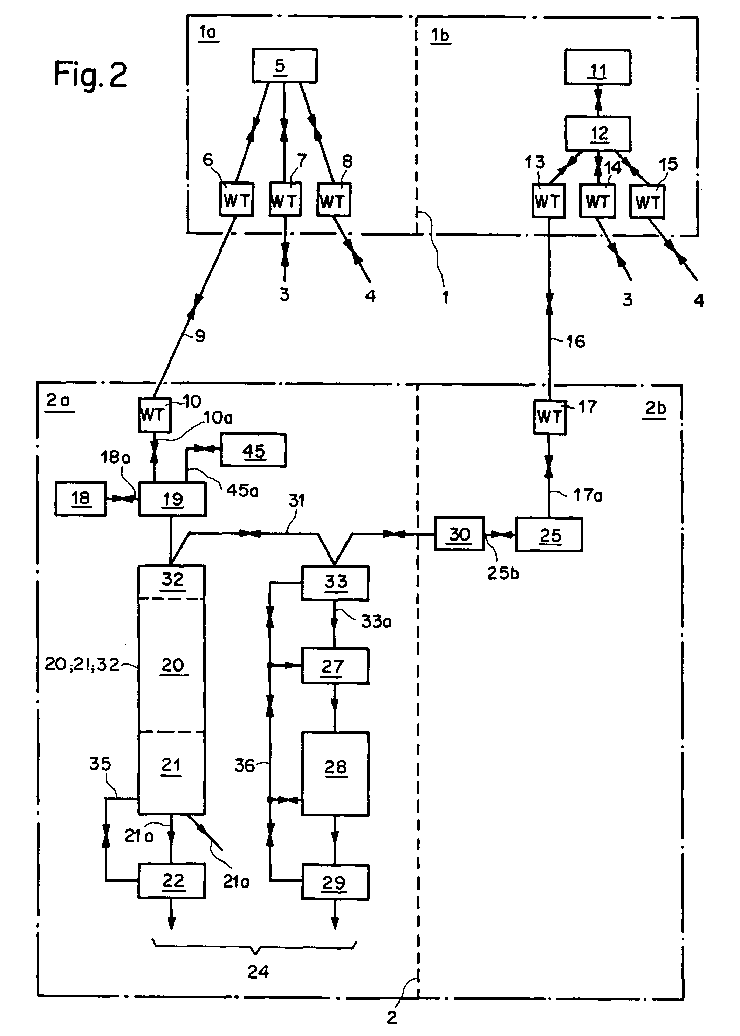

Eine erste in der Fig. 2 dargestellte Variante der erfindungsgemässen Anlage ist ähnlich aufgebaut wie die in der Fig. 1 dargestellte bekannte Anlage mit folgendem Hauptunterschied: Die Fernwirk-Unterstelle 25 ist nicht unmittelbar mittels einer Parallelverdrahtung, sondern über ein zur Fernwirk-Unterstelle 25 gehörendes dezentrales Eingabe/Ausgabe-Modul 30 und eine oder mehrere nachfolgenden seriellen Busverbindungen 31 mit der Rundsteuer-Teilanlage 2a der betreffenden Unterstelle 2 verbunden, wobei dort das Steuergerät 19 unmittelbar und, falls vorhanden, die Triggergeräte 20 und 27 über ein ihnen jeweils zugehöriges, dezentral angeordnetes Eingabe/Ausgabe-Modul 32 bzw. 33 an den seriellen Busverbindungen 31 angeschlossen sind. Die Fernwirk-Unterstelle 25 ist dabei über Drahtverbindungen 25b mit dem nahebei, z. B. in einer Entfernung von annähernd 1 Meter angeordneten dezentralen Eingabe/Ausgabe-Modul 30 verbunden.

In der erfindungsgemässen Anlage bilden vorzugsweise mindestens einer der Rundsteuersender 21 bzw. 28 zusammen mit dem ihm jeweils zugehörigen Rundsteuersender-Triggergerät 20 bzw. 27 und dem ihm ebenfalls jeweils zugehörigen Eingabe/Ausgabe-Modul 32 bzw. 33 eine Rundsteuer-Senderbaugruppe 20;21;32 bzw. 27;28;33. In der in der Fig. 2 dargestellten Anlage gilt die Annahme, dass nur eine Rundsteuer-Senderbaugruppe 20;21;32 vorhanden ist, während das Eingabe/Ausgabe-Modul 33, das Triggergerät 27 und der Rundsteuersender 28 getrennte Baueinheiten bilden. Das Eingabe/Ausgabe-Modul 33 ist in diesem Fall über Drahtverbindungen 33a und dem nahebei, annähernd 1 Meter entfernt angeordneten Triggergerät 27 mit dem Rundsteuersender 28 verbunden.

Die Rundsteuersender-Triggergeräte 20 und 27 bzw. die Rundsteuer-Senderbaugruppen 20;21;32 und 27;28;33, falls vorhanden, sowie die Fernwirk-Unterstelle 25 und das Rundsteuersender-Steuergerät 19 sind somit zum gegenseitigen Informationsaustausch innerhalb der betreffenden Unterstelle 2 jeweils über das ihnen zugehörige, dezentral angeordnete Eingabe/Ausgabe-Modul 32 bzw. 33 bzw. 30 oder, im Fall des Steuergerätes 19, unmittelbar an einer oder mehreren seriellen Busverbindungen 31 angeschlossen. Die letzteren dienen der gemeinsamen Übertragung von Rundsteuer- und Fernwirk-Informationen zwischen den einzelnen Baueinheiten der Rundsteuer- und der Fernwirk-Teilanlagen 2a und 2b der Unterstelle 2. Nur das Pilotsignal wird getrennt über ein eigenes paralleles Aderpaar übertragen.

Die Rundsteuer-Senderbaugruppen 20;21;32 und 27;28;33 sind, falls vorhanden, über bidirektionale Verbindungen 35 mit der ihnen jeweils zugehörigen Ankopplung 22 und 23 bzw. 29 verbunden. Desgleichen sind, falls vorhanden, das Eingang/Ausgang-Modul 32 bzw. 33, das Triggergerät 20 bzw. 27, der Rundsteuersender 21 bzw. 28 sowie die Ankopplung 22 bzw. 29 über bidirektionale Verbindungen 36 miteinander verbunden. Über die Verbindungen 35 und 36 werden dabei jeweils sowohl Rundsteuer- als auch Fernwirk-Informationen übertragen.

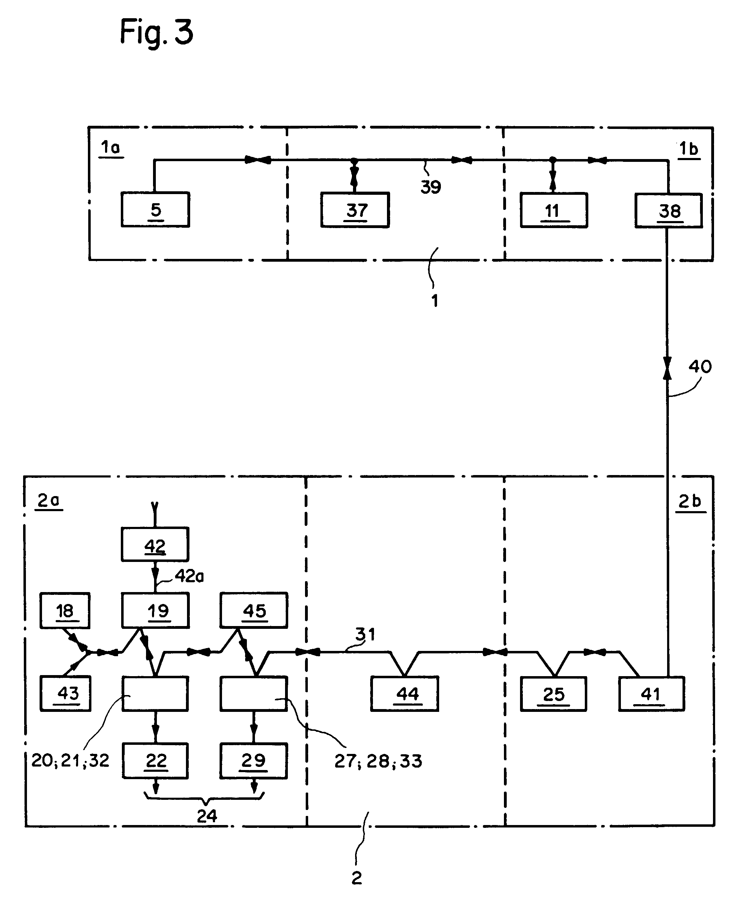

In einer zweiten, in der Fig. 3 dargestellten Variante der erfindungsgemässen Anlage sind in der Zentrale 1 die zentrale Rundsteuer-Sendeautomatik 5, fakultativ eine Fernzähl-Zentrale 37, die Fernwirk-Leitstelle 11 sowie neu eine Kommunikations-Einrichtung 38 (LAN z.B. Ethernet mit TCP11P, Decnet oder WAN z. B X400 oder MAP oder Feldbus z. B. Profibus) über ein Busverbindungsnetzwerk 39 miteinander verbunden zum gegenseitigen Informationsaustausch in der Zentrale 1. Die Kommunikations-Einrichtung 38 der Zentrale 1 ist ausserdem über einen beliebigen Übertragungsweg 40 mit mindestens einer Unterstelle, z. B. der Unterstelle 2, und dort mit einer lokalen Kommunikations-Einrichtung 41 der Unterstelle verbunden zum bidirektionalen Informationsaustausch zwischen der Zentrale 1 und der betreffenden Unterstelle. Ein Pilot-Funkempfänger 42 ist vorzugsweise jeweils in den Unterstellen vorhanden zum Empfang eines von einem GPS-Satelliten ausgesandten Zeitsignals. Ein Ausgang des Pilot-Funkempfängers 42 ist mittels Drahtverbindungen 42a jeweils mit dem Rundsteuersender-Steuergerät 19 der betreffenden Unterstelle verbunden. Der Pilot-Funkempfänger 42 generiert, ausgehend vom empfangenen Zeitsignal, ein Pilotsignal, welches über die Drahtverbindungen 42a dem Steuergerät 19 zugeführt wird. Das Rundsteuersender-Steuergerät 19, mindestens eine Rundsteuer-Senderbaugruppe, z. B. 20;21;32 und 27;28;33, und/oder das Eingabe/Ausgabe-Modul 32 bzw. 33 mindestens eines Rundsteuersenders 21 bzw. 28, sowie die Fernwirk-Unterstelle 25, die Kommunikations-Einrichtung 41 und fakultativ eine Fernzähl-Unterstelle 44 sind in ihrer Unterstelle an den seriellen Busverbindungen 31 der betreffenden Unterstelle angeschlossen zwecks eines gegenseitigen Informationsaustauschs von Rundsteuer-, Fernwirk- und ggf. Fernzähl-Informationen innerhalb der letzteren. Ein Rundsteuer-Telegrammgenerator 43 und/oder die lokale Rundsteuerautomatik 18 sind ausserdem am Rundsteuersender-Steuergerät 19 oder an den seriellen Busverbindungen 31 angeschlossen. In einer bevorzugten Ausführung ist der Rundsteuer-Telegrammgenerator 43 in der lokalen Rundsteuer-Sendeautomatik 18 angeordnet und die letztere am Rundsteuersender-Steuergerät 19 oder an den seriellen Busverbindungen 31 angeschlossen.

Die einzelnen Teile der Anlage müssen oft mit Hilfe mindestens eines zusätzlichen Bedienungsgerätes 45 bedient, d. h. z. B. parametriert werden. Das bzw. die Bedienungsgeräte 45 können dabei auch nur temporär angeschlossen sein. Nachfolgend gilt die Annahme, dass nur ein Bedienungsgerät 45 in der Unterstelle vorhanden ist. Dieses Bedienungsgerät 45 ist entweder, wie in der Fig. 2 dargestellt, am Rundsteuersender-Steuergerät 19 oder, wie in der Fig. 3 dargestellt, unmittelbar an den seriellen Busverbindungen 31 angeschlossen. Das Bedienungsgerät 45 ist vorzugsweise ein "Personal computer", da für die meisten Bussysteme bereits Busanschluss-Karten für "Personal computer" existieren. Sein Anschluss z. B. an das Steuergerät 19 erfolgt vorzugsweise über eine normierte RS-232-Schnittstelle und Kabelverbindungen 45a. Der "Personal computer" ist z. B. ein "Laptop"- oder ein ähnlicher Computer.

Die seriellen Busverbindungen 31 bestehen vorzugsweise aus Glasfasern oder sie sind bevorzugt Drahtverbindungen gemäss Norm RS 485. Im letzteren Fall sind sie vorzugsweise potentialgetrennte Drahtverbindungen. Die serielle Busverbindung 31 ist z. B. ein Profibus, ein Pofibus-FMS, ein Profibus-DP, ein Interbus-S, ein CAN-Bus, ein FIP-Bus, ein ISP-Bus oder ein LON-Bus, usw. Je nach verwendentem Bus-System kann die geometrische Struktur der Busverbindungen völlig unterschiedlich aussehen. Aus Redundanzgründen können die Busverbindungen auch parallel geführt oder in Teilbusverbindungen aufgeteilt sein. Die Auswahl des Bussystems hängt sowohl von den unterschiedlichen Informations-Übertragungsgeschwindigkeiten, welche ihrerseits von den zu übertragenden Informationsmengen abhängig sind, als auch von der Beeinträchtigung des Gesamtbussystems durch eine Störung ab, z. B. durch einen Kabelunterbruch. Ebensowichtig sind die Funktionen, die das betreffende Bus-System bietet, wie z. B. "Multimaster", "Master-Slave" oder "Broadcast", um gleichzeitige Ereignisse auszulösen, sowie Fehlerbehandlung, Fehlerkorrektur, maximale Distanzen ohne "Repeater", passiver oder aktiver Busanschluss der Bus-Teilnehmer, benötigte parallelgeführte Speisung, Anzahl benötigte Leiter, usw. Die Verwendung der seriellen Busverbindungen 31 reduziert massiv den für jede Unterstelle 2, 3, 4, usw. benötigten Verdrahtungsaufwand. Auch können, ohne zusätzlichen Verdrahtungsaufwand, zusätzliche und/oder ausführlichere Informationen in beiden Übertgungsrichtungen übertragen und ausgetauscht werden, wodurch ein grosser Verdrahtungsaufwand erspart wird.

Solche zusätzliche und/oder ausführlichere Informationen sind z. B.:
- Dezentral erfasste Rundsteuer-Informationen:
   Jeder Rundsteuersender 21 oder 28 bzw. jede Rundsteuer-Senderbaugruppe 20;21;32 oder 27;28;33 verfügt zu diesem Zweck z. B. über zusätzliche analoge und/oder digitale Ein- und Ausgänge, die über die seriellen Busverbindungen 31 gesetzt bzw. gelesen werden können. Dadurch ist es möglich, ohne zusätzlichen Verdrahtungsaufwand, weitere Rundsteuer-Informationen, wie z. B. Quittungssignale eines Kontroll-Rundsteuerempfängers, der z. B. in oder in der Nähe der betreffenden Unterstelle an das Energieversorgungsnetz 24 angeschlossen ist zwecks Ermittlung von Rundsteuersignal-Istwerten, und/oder Ankopplungsfehler, usw. dezentral zu erfassen und/oder auszugeben, z. B. zwecks Ansteuerung von Schützen, usw.
- Dezentral erfasste ausführlichere Rundsteuer-, Fernwirk- und sonstige Informationen:
   Auch in der bekannten Anlage werden gewisse Rundsteuer-und/oder Fernwirk-Informationen in den Unterstellen erfasst und über das vorhandene Fernwirksystem von den Unterstellen 2, 3, 4, usw. zur Zentrale 1 übertragen bzw., in umgekehrter Übertragungsrichtung, gewisse Informationen und/oder Befehle von der Zentrale 1 über das Fernwirksystem zu den Unterstellen 2, 3, 4, usw. übermittelt. Dabei wird in den letzteren in der bekannten Anlage (siehe Fig. 1) zu diesem Zweck jeweils eine aufwendige Parallelverdrahtung zwischen den in der Regel räumlich entfernt angeordneten Fernwirk- und Rundsteuer-Teilanlagen verwendet. Die in der erfindungsgemässen Anlage neu verwendeten seriellen Busverbindungen 31 und die an den letzteren angeschlossenen dezentralen Eingabe/Ausgabe-Module 30, 32 und 33 sowie ggf. die Kommunikations-Einrichtungen 38 und 41 ersetzen nicht nur diese Parallelverdrahtung, sondern gestatten auch einen Austausch von mehr und/oder ausführlicheren Rundsteuer-, Fernwirk- und/oder sonstigen Informationen, wie z. B. Fernzähl-Informationen.
- Rundsteuer-Tasttelegramm und zugehöriges Quittungssignal:
   Durch eine geeignete Auswahl des Bussystems lässt sich auch das Rundsteuer-Tasttelegramm in Echtzeit über die seriellen Busverbindungen 31 übertragen. Dazu ist eine Genauigkeit der gleichzeitigen Übertragung des Rundsteuer-Tasttelegramms von der Zentrale 1 zu den einzelnen Rundsteuersender 21 und 28 der verschiedenen Unterstellen 2, 3, 4, usw. im Millisekunden-Bereich erforderlich, falls die Rundsteuersender 21 und 28 auf ein vermaschtes Energieversorgungsnetz 24 arbeiten. Dabei ist es möglich entwederjeweils nur den Anfang und das Ende jeweils den Anfang und die Impulsdauer eines jeden Impulses des Rundsteuer-Tasttelegramms zu übertragen. Die Rundsteuersender 21 und 28 senden bzw. beenden dann den entsprechenden Rundsteuerimpuls augenblichlich nach Erhalt des betreffenden Befehls. Es ist auch möglich, dass jeder Rundsteuersender 21 und 28 eine für ihn vorgegebene Verzögerungszeit abwartet, bevor er den Rundsteuerimpuls sendet oder beendet, was möglicherweise zur Synchronisierung der einzelnen Rundsteuersendungen der verschiedenen Unterstellen 2, 3, 4, usw. erforderlich ist. Als weitere Möglichkeit kann das Rundsteuer-Tasttelegramm in Gestalt einer codierten Startzeit von der Zentrale 1 zu den Unterstellen 2, 3, 4, usw. übertragen werden. Das Echtzeit-Rundsteuertelegramm wird dann in den einzelnen Unterstellen lokal z. B. mittels des Rundsteuer-Telegrammgenerators 43 generiert. Auf eine gleiche oder ähnliche Weise können auch Quittungssignale, z. B. Istwert-Tasttelegramme, in den Unterstellen 2, 3, 4, usw. erzeugt und von dort zur Zentrale 1 rückgemeldet werden.
- Lokales Rundsteuer-Tasttelegramm und zugehöriges Quittungssignal:
   In der bekannten Anlage werden digitale Eingang/Ausgang-Signale als Rundsteuer-Tasttelegramme in Echtzeit zwischen der lokalen Rundsteuer-Sendeautomatik 18 und dem Steuergerät 19 bzw. in umgekehrter Richtung Quittungssignale zwischen dem letzteren und der lokalen Rundsteuer-Sendeautomatik 18 übertragen. Dies ist in der zweiten Variante der erfindungsgemässen Anlage nicht mehr erforderlich, da die lokale Rundsteuer-Sendeautomatik 18 und/oder der Rundsteuer-Telegrammgenerator 43 über die seriellen Busverbindungen 31 unmittelbar mit den Rundsteuersendern 21 und 28 kommunizieren, was einerseits weitere Parallelverdrahtung erspart und andererseits weitere Informationen ergibt, die rationell über die seriellen Busverbindungen 31 übertragen werden.
- Informationen zwischen Zentrale 1 und Busteilnehmern:
   Die Rundsteuer-Teilanlage 1a und mit ihr die zentrale Rundsteuer-Sendeautomatik 5 sind meistens in der Nähe der Fernwirk-Leitstelle 11 angesiedelt und in der bekannten Anlage z. B. über den WT-Kanal 6;9;10 mit der Unterstelle 2 verbunden. Über den WT-Kanal 6;9;10 erfolgt dabei unter anderem die Synchronisierung der Pilotfrequenz der Rundsteuer-Sendefrequenz und/oder der Rundsteuer-Tasttelegramme der betreffenden Unterstelle. Die Kommunikationsstrecke 38;40;41 der zweiten erfindungsgemässen Variante ist dagegen unmittelbar an den seriellen Busverbindungen 31 angeschlossen, so dass eine Kommunikation von der zentralen Rundsteuer-Sendeautomatik 5 mit jedem an den Busverbindungen 31 angeschlossenen Busteilnehmer möglich ist. Der lokale Teil der Kommunikations-Einrichtung kann dabei auch eine Teilbaugruppe eines dieser Busteilnehmer sein, was immer noch eine Kommunikation mit allen Busteilnehmern ermöglicht.

Bisher hatten alle Teilsysteme einer Unterstelle eines Energieversorgungsunternehmens, also z. B. das Rundsteuer-, das Fernwirk- und das Fernzähl-System, voneinander unabhängige Kommunikations-Einrichtungen. In der zweiten Variante der erfindungsgemässen Anordnung werden dagegen gemeinsame Kommunikationsstrecken 39 bzw. 38;40;41 bzw. 31;32;33 für alle diese Systeme verwendet, was den Vorteil hat, dass die letzteren über ein einziges gemeinsames Protokoll, z. B. gemäss DIN 19244 oder IEC 870-5, mit der Zentrale 1 kommunizieren können.

## Patentansprüche

1. Anlage, mit einer Zentrale (1), die eine zentrale Rundsteuer-Sendeautomatik (5) enthält und über einen oder mehrere Übertragungswege (9, 16 bzw. 38) mit mindestens einer Unterstelle (2) verbunden ist, die jeweils ein Rundsteuersender-Steuergerät (19 bzw. 26) und mindestens einen Rundsteuersender (28 bzw. 21) enthält, wobei dem letzterenjeweils ein Rundsteuersender-Triggergerät (27 bzw. 20) zugeordnet ist und wobei der Rundsteuersender (28 bzw. 21) jeweils über mindestens eine Ankopplung (29 bzw. 22,23) mit einer Mittel- oder Hochspannungsebene eines Energieversorgungsnetzes (24) verbunden ist, dadurch gekennzeichnet, dass das Rundsteuersender-Steuergerät (19) und die Rundsteuersender-Triggergeräte (27, 20) zum gegenseitigen Informationsaustausch innerhalb der betreffenden Unterstelle (2) jeweils unmittelbar oder über ein ihnen zugehöriges, dezentral angeordnetes Eingabe/Ausgabe-Modul (32, 33) an einer oder mehreren seriellen Busverbindungen (31) angeschlossen sind.

2. Anlage nach Anspruch 1, dadurch gekennzeichnet, dass mindestens einer der Rundsteuersender (21 bzw. 28 ) zusammen mit dem ihm jeweils zugehörigen Rundsteuersender-Triggergerät (20 bzw. 27) und dem ihm jeweils zugehörigen Eingabe/Ausgabe-Modul (32 bzw. 33) eine Rundsteuer-Senderbaugruppe (20;21;32 bzw. 27;28;33) bilden.

3. Anlage nach Anspruch 1 oder 2 mit einer Fernwirk-Leitstelle (11) in der Zentrale (1) und einer Fernwirk-Unterstelle (25) in der Unterstelle (2), dadurch gekennzeichnet, dass die Fernwirk-Unterstelle (25) über ein zugehöriges, dezentral angeordnetes Eingabe/Ausgabe-Modul (30) an den seriellen Busverbindungen (31) angeschlossen sind.

4. Anlage nach einem der Ansprüche 1 bis 3, dadurch gekennzeichnet, dass die zentrale Rundsteuer-Sendeautomatik (5), gegebenenfalls die Fernwirk-Leitstelle (11) und eine Kommunikations-Einrichtung (38) zum gegenseitigen Informationsaustausch in der Zentrale (1) über ein Busverbindungsnetzwerk (39) miteinander verbunden sind, dass die Kommunikations-Einrichtung (38) der Zentrale (1) mit einer Kommunikations-Einrichtung (41) mindestens einer Unterstelle (2) verbunden ist zum bidirektionalen Informationsaustausch zwischen der Zentrale (1) und der betreffenden Unterstelle (2) und dass in der letzterenjeweils die Kommunikations-Einrichtung (41), gegebenenfalls die Fernwirk-Unterstelle (25), das Rundsteuersender-Steuergerät (19) sowie mindestens eine Rundsteuer-Senderbaugruppe (20;21;32 bzw. 27;28;33) und/oder das Eingabe/Ausgabe-Modul (32 bzw. 33) mindestens eines Rundsteuersenders (21 bzw. 28) an den seriellen Busverbindungen (31) der betreffenden Unterstelle (2) angeschlossen sind zwecks eines gegenseitigen Informationsaustauschs innerhalb der letzteren.

5. Anlage nach einem der Ansprüche 1 bis 4, dadurch gekennzeichnet, dass die seriellen Busverbindungen (31) jeweils aus Glasfasern bestehen.

6. Anlage nach einem der Ansprüche 1 bis 4, dadurch gekennzeichnet, dass die seriellen Busverbindungen (31) Drahtverbindungen gemäss Norm RS 485 sind.

7. Anlage nach Anspruch 6, dadurch gekennzeichnet, dass die seriellen Busverbindungen (31) potentialgetrennte Drahtverbindungen sind.

8. Anlage nach einem der Ansprüche 1 bis 7, dadurch gekennzeichnet, dass mindestens ein Bedienungsgerät (34) am Rundsteuersender-Steuergerät (19) oder an den seriellen Busverbindungen (31) angeschlossen ist.

9. Anlage nach Anspruch 8, dadurch gekennzeichnet, dass das Bedienungsgerät (34) ein "Personal computer" ist.

10. Anlage nach einem der Ansprüche 1 bis 9, dadurch gekennzeichnet, dass ein Rundsteuer-Telegrammgenerator (43) und/oder eine lokale Rundsteuer-Sendeautomatik (18) am Rundsteuersender-Steuergerät (19) oder an den seriellen Busverbindungen (31) angeschlossen ist.

11. Anlage nach Anspruch 10, dadurch gekennzeichnet, dass der Rundsteuer-Telegrammgenerator (43) in der lokalen Rundsteuer-Sendeautomatik (18) angeordnet ist und dass die letztere am Rundsteuersender-Steuergerät (19) oder an den seriellen Busverbindungen (31) angeschlossen ist.

12. Anlage nach einem der Ansprüche 1 bis 11, dadurch gekennzeichnet, dass ein Pilot-Funkempfänger (42) jeweils in den Unterstellen (2, 3, 4) vorhanden ist und dass ein Ausgang des Pilot-Funkempfängers (42) jeweils mit dem Rundsteuersender-Steuergerät (19) der betreffenden Unterstelle verbunden ist.

## Claims

1. An installation having a central station (1) which includes a central automatic ripple control transmission means (5) and which is connected by way of one or more transmissions paths (9, 16 or 38) to at least one sub-station (2) which respectively includes a ripple control transmitter control device (19 or 26) and at least one ripple control transmitter (28 or 21), wherein associated with the latter is a respective ripple control transmitter trigger device (27 or 20) and wherein the ripple control transmitter (28 or 21) is respectively connected by way of at least one coupling means (29 or 22, 23) to a medium or high voltage plane of an energy supply mains (24), characterised in that the ripple control transmitter control device (19) and the ripple control transmitter trigger devices (27, 28) are respectively connected for mutual information exchange within the sub-station (2) in question directly or by way of a decentrally arranged input/output module (32, 33) which is associated with them, to one or more serial bus connections (31).

2. An installation according to claim 1 characterised in that at least one of the ripple control transmitters (21 or 28) together with the ripple control transmitter trigger device (20 or 27) respectively associated therewith and the input/output module (32 or 33) respectively associated therewith form a ripple control transmitter unit (20; 21; 32 or 27; 28; 33).

3. An installation according to claim 1 or claim 2 having a remote action control station (11) in the central station (1) and a remote action sub-station (25) in the sub-station (2) characterised in that the remote action sub-station (25) is connected to the serial bus connections (31) by way of an associated, decentrally arranged input/output module (30).

4. An installation according to one of claims 1 to 3 characterised in that the central automatic ripple control transmission means (5), optionally the remote action control station (11) and a communication device (38) are connected together for mutual information exchange in the central station (1) by way of a bus connecting network (39), that the communication device (38) of the central station (1) is connected to a communication device (41) of at least one sub-station (2) for bidirectional information exchange between the central station (1) and the sub-station (2) in question and that in the latter the respective communication device (41), optionally the remote action sub-station (25), the ripple control transmitter control device (19) and at least one ripple control transmitter unit (20; 21; 32 or 27; 28; 33) and/or the input/output module (32 or 33) of at least one ripple control transmitter (21 or 28) are connected to the serial bus connections (31) of the sub-station (2) in question for the purposes of mutual information exchange within the latter.

5. An installation according to one of claims 1 to 4 characterised in that the serial bus connections (31) respectively comprise glass fibres.

6. An installation according to one of claims 1 to 4 characterised in that the serial bus connections (31) are wire connections in accordance with standard RS 485.

7. An installation according to claim 6 characterised in that the serial bus connections (31) are potential-separated wire connections.

8. An installation according to one of claims 1 to 7 characterised in that at least one operating device (34) is connected to the ripple control transmitter control device (19) or to the serial bus connections (31).

9. An installation according to claim 8 characterised in that the operating device (34) is a personal computer.

10. An installation according to one of claims 1 to 9 characterised in that a ripple control telegram generator (43) and/or a local automatic ripple control transmission means (18) is connected to the ripple control transmitter control device (19) or to the serial bus connections (31).

11. An installation according to claim 10 characterised in that the ripple control telegram generator (43) is arranged in the local automatic ripple control transmission means (18) and that the latter is connected to the ripple control transmitter control device (19) or to the serial bus connections (31).

12. An installation according to one of claims 1 to 11 characterised in that there is a respective pilot radio receiver (42) in each of the sub-stations (2, 3, 4) and that an output of the respective pilot radio receiver (42) is connected to the ripple control transmitter control device (19) of the sub-station in question.

## Revendications

1. Installation comprenant un poste central (1) qui comporte un dispositif émetteur automatique central (5) de la télécommande centralisée et qui est relié par une ou plusieurs voies de transmission (9, 16 ou 38) à au moins un poste secondaire (2) qui comporte respectivement un appareil de commande (19 ou 26) de l'émetteur de la télécommande centralisée et au moins un émetteur (28 ou 21) de la télécommande centralisée, un déclencheur (27 ou 20) de l'émetteur de la télécommande centralisée étant respectivement affecté à ce dernier et l'émetteur (28 ou 21) de la télécommande centralisée étant respectivement relié à un niveau de moyenne ou haute tension d'un réseau électrique (24) par au moins un couplage (29 ou 22, 23), caractérisée en ce que l'appareil de commande (19) de l'émetteur de la télécommande centralisée et les déclencheurs (27, 20) de l'émetteur de la télécommande centralisée sont respectivement reliés à une ou plusieurs connexions bus (31) en série pour l'échange réciproque d'informations à l'intérieur du poste secondaire (2) concerné, soit directement soit par un module d'entrée/sortie (32, 33) décentralisé et leur correspondant.

2. Installation selon la revendication 1, caractérisée en ce qu'au moins l'un des émetteurs (21 ou 28) de la télécommande centralisée forme avec le déclencheur (20 ou 27) lui correspondant respectivement de l'émetteur de la télécommande centralisée et le module d'entrée/sortie (32 ou 33) lui correspondant respectivement, un module émetteur (20 ; 21 ; 32 ou 27 ; 28 ; 33) de la télécommande centralisée.

3. Installation selon la revendication 1 ou la revendication 2 comportant un poste pilote (11) de télécommande dans le poste central (1) et un poste secondaire (25) de télécommande dans le poste secondaire (2), caractérisée en ce que le poste secondaire (2) de la télécommande est relié aux connexions bus (31) en série par un module d'entrée/sortie (30) décentralisé et correspondant.

4. Installation selon l'une quelconque des revendications 1 à 3, caractérisée en ce que le dispositif émetteur automatique central (5) de la télécommande centralisée, le cas échéant, le poste pilote (11) de télécommande et un dispositif de communication (38) sont reliés les uns aux autres par un réseau de connexions bus (39) pour l'échange réciproque d'informations dans le poste central (1), en ce que le dispositif de communication (38) du poste central (1) est relié à un dispositif de communication (41) au moins d'un poste secondaire (2) pour l'échange d'informations bidirectionnel entre le poste central (1) et le poste secondaire (2) concerné et en ce que dans le poste secondaire (2) concerné, le dispositif de communication (41), le cas échéant le poste secondaire (25) de télécommande, l'appareil de commande (19) de l'émetteur de la télécommande centralisée, au moins un module émetteur (20 ; 21 ; 32 ou 27 ; 28 ; 33) de la télécommande centralisée et/ou le module d'entrée/sortie (32 ou 33) d'au moins un émetteur (21 ou 28) sont respectivement reliés aux connexions bus (31) du poste secondaire (2) concerné dans le but d'un échange réciproque d'informations à l'intérieur du poste secondaire (2) concerné.

5. Installation selon l'une quelconque des revendications 1 à 4, caractérisée en ce que les connexions bus (31) en série sont respectivement en fibres de verre.

6. Installation selon l'une quelconque des revendications 1 à 4, caractérisée en ce que les connexions bus (31) en série sont des connexions à fils selon la norme RS 485.

7. Installation selon la revendication 6, caractérisée en ce que les connexions bus (31) en série sont des connexions à fils à potentiel séparé.

8. Installation selon l'une quelconque des revendications 1 à 7, caractérisée en ce qu'au moins un appareil de contrôle (34) est relié à l'appareil de commande (19) de l'émetteur de la télécommande centralisée ou aux connexions bus (31) en série.

9. Installation selon la revendication 8, caractérisée en ce que l'appareil de contrôle (34) est un "ordinateur personnel".

10. Installation selon l'une quelconque des revendications 1 à 9, caractérisée en ce qu'un générateur de télégramme (43) de la télécommande centralisée et/ou un dispositif émetteur automatique local de la télécommande centralisée (18) est relié à l'appareil de commande (19) de l'émetteur de la télécommande centralisée ou aux connexions bus (31) en série.

11. Installation selon la revendication 10, caractérisée en ce que le générateur de télégramme (43) de la télécommande centralisée est disposé dans le dispositif émetteur automatique local (18) de la télécommande centralisée et en ce que ce dernier est relié à l'appareil de commande (19) de l'émetteur de la télécommande centralisée ou aux connexions bus (31) en série.

12. Installation selon l'une quelconque des revendications 1 à 11, caractérisée en ce qu'un récepteur radio pilote (42) est respectivement présent dans les postes secondaires (2, 3, 4) et en ce qu'une sortie du récepteur radio pilote (42) est respectivement reliée à l'appareil de commande (19) de l'émetteur de la télécommande centralisée du poste secondaire concerné.
